# EUROPEAN PATENT APPLICATION

(11) **EP 4 521 689 A2**
(43) Date of publication of application: **12.03.2025**
(21) Application number: 24221480.7
(22) Date of filing: 19.12.2024
(51) Int. Cl.: H04L 12/28

(54) **METHOD AND APPARATUS FOR ACCESSING VIRTUAL PRIVATE CLOUD, DEVICE AND STORAGE MEDIUM**

(30) Priority: 29.12.2023 CN 202311869414
(71) Applicant: Beijing Baidu Netcom Science Technology Co., Ltd., Beijing 100085 (CN)
(72) Inventor: DU, Jie, Beijing, 100085 (CN); ZHANG, Fenghui, Beijing, 100085 (CN); ZHANG, Lin, Beijing, 100085 (CN); LIANG, Aiyi, Beijing, 100085 (CN); CHEN, Du, Beijing, 100085 (CN)
(74) Representative: J A Kemp LLP

(57) **Abstract**

The present disclosure provides a method and apparatus for accessing a virtual private cloud (VPC), a device and a storage medium, which are applied to the field of cloud computing, intelligent search, Internet of Things and others technical fields in data processing. The method includes: receiving a first access request, where the first access request carries virtual address information, the first access request is used for indicating access to a target service node arranged in a target VPC; the target service node has actual address information; the virtual address information is used for indicating actual address information of the target VPC and the target service node, and the actual address information is a real address of a service node; accessing the target service node according to the first access request. Based on the above method, it is possible to expand the number of concurrent accesses to service nodes with the same actual address information in different virtual private clouds.

## Description

### TECHNICAL FIELD

The present disclosure relates to the field of data processing technology, especially to the field of cloud computing, intelligent search, Internet of Things and the like, in particular to a method and apparatus for accessing a virtual private cloud (VPC), a device and a storage medium.

### BACKGROUND

At present, as virtualization and cloud computing technologies continue to advance, more and more service providers are offering cloud services. These providers enable enterprises to establish their own virtual private clouds (abbreviated as VPC) and allocate cloud resources in their own VPCs.

### SUMMARY

The present disclosure provides a method and apparatus for accessing a virtual private cloud (VPC), a device and a storage medium, to realize an access connection to service node(s) in the VPC.

According to a first aspect of the present disclosure, a method for accessing a virtual private cloud is provided, including:
receiving a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node;
accessing the target service node according to the first access request.

According to a second aspect of the present disclosure, an apparatus for accessing a virtual private cloud (VPC) is provided, including:
a first receiving unit, configured to receive a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node;
an accessing unit, configured to access the target service node according to the first access request.

According to a third aspect of the present disclosure, an electronic device is provided, including: at least one processor; and a memory communicatively connected with the at least one processor; where the memory stores an instruction executable by the at least one processor, and the instruction is executed by the at least one processor to enable the at least one processor to execute the method described in the first aspect.

According to a fourth aspect of the present disclosure, a non-transitory computer readable storage medium storing a computer instruction is provided, where the computer instruction is configured to enable a computer to execute the method described in the first aspect.

According to a fifth aspect of the present disclosure, a computer program product is provided, the computer program product includes: a computer program, the computer program is stored in a readable storage medium, at least one processor of an electronic device may read the computer program from the readable storage medium, and the at least one processor executes the computer program to enable the electronic device to execute the method described in the first aspect.

It should be understood that the content described in this part is not intended to identify critical or significant features of embodiments of the present disclosure, nor is it intended to limit the scope of the present disclosure. Other features of the present disclosure will be made easier to understand by the following instructions.

### BRIEF DESCRIPTION OF DRAWINGS

Drawings are for a better understanding of the present scheme and do not constitute a limitation of the present disclosure.
FIG. 1 is a schematic diagram of accessing a virtual private cloud provided by related art.
FIG. 2 is a flowchart of a first method for accessing a virtual private cloud provided by an embodiment of the present disclosure.
FIG. 3 is a flowchart of a second method for accessing a virtual private cloud provided by an embodiment of the present disclosure.
FIG. 4 is a flowchart of a third method for accessing a virtual private cloud provided by an embodiment of the present disclosure.
FIG. 5 is a flowchart of message encapsulation provided by an embodiment of the present disclosure.
FIG. 6 is a flowchart of message decapsulation provided by an embodiment of the present disclosure.
FIG. 7 is a schematic structural diagram of an apparatus for accessing a virtual private cloud provided by an embodiment of the present disclosure.
FIG. 8 is a schematic structural diagram of another apparatus for accessing a virtual private cloud provided by an embodiment of the present disclosure.
FIG. 9 is a schematic structural diagram of an electronic device provided by an embodiment of the present disclosure.
FIG. 10 is a block diagram of an electronic device configured to implement a method for accessing a virtual private cloud of an embodiment of the present disclosure.

### DESCRIPTION OF EMBODIMENTS

Exemplary embodiments of the present disclosure are explained below combining with the drawings, which include various details of embodiments of the present disclosure for understanding and should be considered exemplary only. Therefore, ordinary person skilled in the art should be aware that various changes and modifications can be made to the embodiments described herein without departing from the scope of the present disclosure. Similarly, for clarity and conciseness, descriptions of known functions and structures have been omitted in the following descriptions.

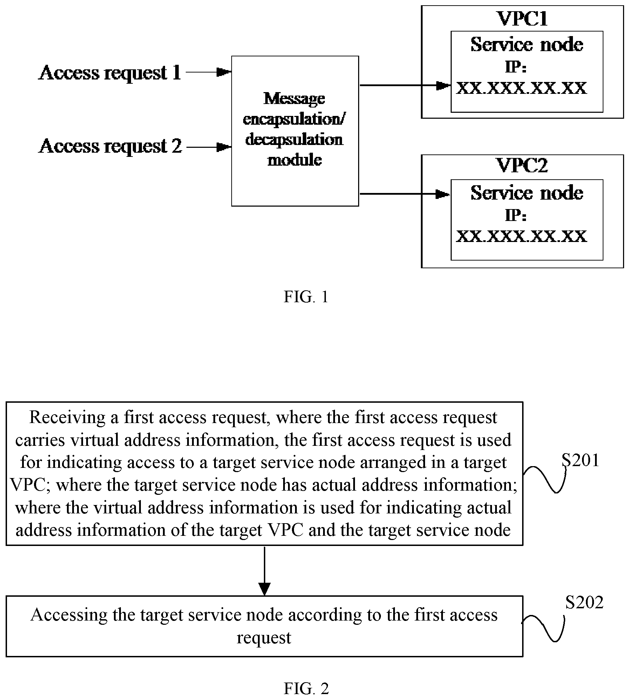

FIG. 1 is a schematic diagram of accessing a virtual private cloud provided by related art. As shown in FIG. 1, service nodes with the same address can be arranged in different virtual private cloud networks, for example, both VPC1 and VPC2 in FIG. 1 are arranged with service nodes whose IP addresses are XX.XXX.XX.XX. In addition, each VPC has its own virtual network identifier (also called VXLAN Network ID, abbreviated as VNI) correspondingly. When two data requesters with same IP address information (such as an access request 1 and an access request 2 in FIG. 1) need to access service nodes with the above IP address information in different VPCs, data requests from the two data requesters carry the same source address, destination address and destination port, but different source ports are carried in the data requests respectively, so that different data requests can be distinguished based on different source ports, thereby avoiding connection conflicts. After that, a message encapsulation/decapsulation module performs massage encapsulation for the above two data requests and then sends them to corresponding VPCs, to establish a communication connection between a data requester and a VPC service node to complete a resource access.

However, affected by a value range of a port, the number of concurrent connections of service nodes with the same address information but corresponding to different VNIs is limited. That is, when a port corresponds to only N possible values, it is possible to support up to N service nodes with the same address information but different VNIs to establish connections to the port with the same source address.

In order to avoid at least one of the above technical problems, inventors of the present disclosure, through creative labor, have arrived at an inventive concept of the present disclosure: by setting up unique virtual address information for each service node in each VPC, then the virtual address information corresponding to service nodes with the same address information in different VPCs will be different. Further, when a data requestor initiates an access request, the virtual address information can be directly used as a destination address of the access request. Due to a uniqueness of the virtual address information, access requests to service nodes with the same address information in different VPCs already have difference in destination addresses, thus, source ports in different access requests can be arbitrarily valued, there is no need to distinguish access requests by setting up different source ports, in order to increase the number of concurrent connections that can be simultaneously established with service nodes with the same address in different VPCs.

A method and apparatus for accessing a virtual private cloud VPC, a device and a storage medium are provided in the present disclosure, which can be applied to cloud computing, intelligent search, Internet of Things and other technical fields in data processing, so as to expand the concurrent number of concurrent accesses to service nodes with the same address information in different VPCs.

In the technical solutions of the present disclosure, the collection, storage, use, processing, transmission, provision and disclosure of user's personal information are in accordance with the provisions of relevant laws and regulations, and do not violate the public order and good customs.

FIG. 2 is a flowchart of a first method for accessing a virtual private cloud provided by an embodiment of the present disclosure, as shown in FIG. 2, the method includes: S201, receiving a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node.

Exemplarily, an execution entity of the embodiment can be an apparatus for accessing a virtual private cloud (VPC), and the apparatus for accessing a virtual private cloud VPC can be a server (such as a local server, or a cloud server), a computer, a processor, or a chip, etc., which is not limited in the embodiment. For example, the apparatus for accessing a VPC can also be a load balancer device in actual applications, to establish a communication connection between a tenant and a VPC. In addition, in the embodiment, the architecture corresponding to the load balancer device is not specifically limited, for example, it can be a seven-layer load balancing architecture as mentioned in the related art.

The first access request in the embodiment can be understood as a request indicating an access to the target service node arranged in the target VPC. However, in the first access request, the actual address information corresponding to the target service node is not directly taken as a destination address in the first access request, but the virtual address information used to indicate the virtual address information of the target service node in the target VPC is used as the destination address in the first access request. It should be noted that virtual address information corresponding to service nodes with the same actual address information in different VPCs are different.

S202, accessing the target service node according to the first access request.

Exemplarily, after the above first access request is received, the target service node arranged in the VPC indicated by the virtual address information can be accessed according to the virtual address information carried in the first access request.

In an example, if a correspondence between virtual address information and a service node in a VPC can be known by the VPC, the above first access information can be directly transmitted to the target VPC indicated by the virtual address, and the target VPC can further resolve, based on the virtual address information, the actual address information of the service node to be actually accessed, and access the above service node.

In an example, if a correspondence between virtual address information and a service node in a VPC cannot be known by the VPC, before the first access request is transmitted to the target VPC, the virtual address information in the first access request can be transformed into corresponding actual address information firstly, and then the service node in the target VPC can be accessed.

It can be understood that in the embodiment, by setting up virtual address information for a service node in a VPC, service nodes with the same actual address information in different VPCs can be distinguished by the virtual address information corresponding to respective service nodes. The virtual address information corresponding to the service node in the access request is used as a destination address, since respective destination addresses included in multiple access requests for accessing service nodes with the same actual address in different VPCs are different, there is no need to adhere to a limitation of setting different source ports for these access requests, thus increasing the number of concurrent accesses to service nodes with the same actual address information in different VPCs.

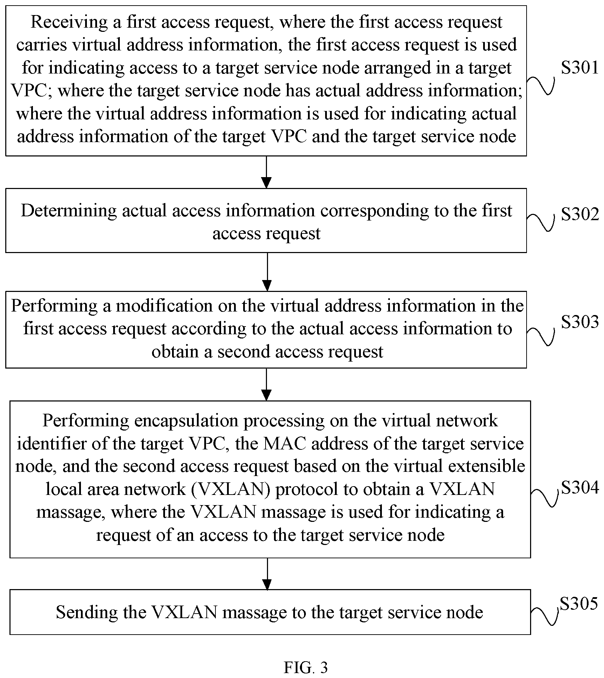

FIG. 3 is a flowchart of a second method for accessing a virtual private cloud provided by an embodiment of the present disclosure, as shown in FIG. 3, the method includes: S301, receiving a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node.

Exemplarily, an execution entity of the embodiment can be an apparatus for accessing a virtual private cloud (VPC), and the apparatus for accessing a virtual private cloud VPC can be a server (such as a local server, or a cloud server), a computer, a processor, or a chip, etc., which is not limited in the embodiment. For example, the apparatus for accessing a VPC can also be a load balancer device in actual applications, to establish a communication connection between a tenant and a VPC. In addition, in the embodiment, the architecture corresponding to the load balancer device is not specifically limited, for example, it can be a seven-layer load balancing architecture as mentioned in the related art.

For a specific principle of step S301, reference can be made to step S201, which will not be described here.

In an example, regarding the above actual address information, an Internet Protocol (abbreviated as IP) address corresponding to the service node can be taken as the actual address information corresponding to the service node.

S302, determining actual access information corresponding to the first access request, where the actual access information includes a virtual network identifier of the target VPC and the actual address information of the target service node.

Exemplarily, in the embodiment, after acquiring the first access request, it is necessary to further determine the target service node that the first access request actually expects to access because a destination address (that is, virtual address information) carried in the first access request is not actual address information.

Among them, the above actual access address information represents the target service node that is expected to be accessed. Specifically, the actual access information includes actual address information corresponding to the target service node, that is, the real address corresponding to the target service node. In addition, the actual access information also includes a virtual network identifier of the target VPC, that is, the virtual network identifier of the VPC where the target service node is located, here the virtual network identifier is used to identify a unique VPC. For example, when acquiring the above actual access information, it is possible to acquire the above actual access information through a preset correspondence among virtual address information, a virtual network identify of a VPC and actual address information of a service node, which is not specifically limited in the embodiment.

In an example, step S302 can be implemented through the following first step, where the first step is: determining the actual access information corresponding to the first access request according to a first mapping set and the virtual address information in the first access request, where the first mapping set records at least one set of first mapping relationships; the first mapping relationship is a correspondence between virtual address information and access information; the access information includes: a virtual network identifier of a VPC where a service node is located, actual address information of the service node and a media access control address (MAC address) of the service node; the actual access information further includes the MAC address of the target service node.

Exemplarily, in the embodiment, the first mapping set includes the first mapping relationship between the virtual address information and the access information, and the access information includes the virtual network identifier of the VPC to which the service node correspondingly belongs, the media access control address of the service node and the actual address information of the service node.

When determining the actual access information corresponding to the first access request, matching between the virtual address information in the first access request and the first mapping relationship included in the first mapping set can be performed, and the access information in the first mapping relationship including the above virtual address information can be determined as the actual address information of the first access request.

It can be understood that in the embodiment, by establishing the above first mapping set, and defining a correspondence among the corresponding MAC address of the service node, the actual address information of the service node, the virtual network identifier corresponding to the VPC where the service node is located, and the virtual address information in the first mapping relationship corresponding to the first mapping set, the accuracy of access request transmission is ensured.

In an example, based on the above example, the following steps may be further included after performing the above first step:
if it is determined that the first mapping set does not include the actual access information of the first access request, determining the actual access information of the first access request according to a second mapping set, where the second mapping set is obtained by backing up the first mapping set, and a first deletion time corresponding to the first mapping set is earlier than a second deletion time corresponding to the second mapping set; where the first deletion time is a time when the first mapping relationship in the first mapping set is deleted, the second deletion time is a time when a second mapping relationship in the second mapping set is deleted, and the second mapping relationship is obtained by backing up the first mapping relationship.

Exemplarily, when a service node in a VPC is deleted, it is necessary to delete the first mapping relationship corresponding to the service node in the VPC included in the first mapping set at the same time. Or, the first mapping relationship in the first mapping set may be deleted by mistake. In order to ensure that a long connection with the service node, originally established based on the first mapping relationship in the first mapping set, does not get interrupted upon the deletion of the first mapping relationship, in the embodiment, the first mapping set is also backed up to obtain the second mapping set after backup. Also, releasing of the second mapping relationship included in the second mapping set will be delayed. That is, if a second mapping relationship 2 is backed up from a first mapping relationship 1 in the first mapping set, when the first mapping relationship 1 in the first mapping set is deleted (this time can be understood as the above first deletion time), the second mapping relationship 2 in the second mapping set will be deleted after a period of time on the basis of the first deletion time, where the time when the second mapping relationship 2 is deleted is the above second deletion time. That is to say, for the same mapping relationship, its corresponding first deletion time in the first mapping set is earlier than the corresponding second deletion time in the second mapping set. In a possible implementation, the second deletion time is a result after adding a fixed value to the first deletion time.

In addition, by setting up the above second mapping set, it is ensured that even after the deletion of the first mapping relationship, the corresponding access information can still be matched through the second mapping relationship in the second mapping set. Subsequently, based on the access information and the access request, message encapsulation can be completed to continue establishing a long connection with the service node that has not been deleted.

In an example, the second deletion time corresponding to the second mapping relationship is positively correlated with a hit count of the second mapping relationship; where the hit count is used to represent the number of times that access information is successfully matched through the second mapping relationship.

Exemplarily, in the embodiment, when setting the second deletion time corresponding to the second mapping relationship, the number of times for which access information is needed can be determined based on the number of times that the second mapping relationship is hit within the second mapping set, that is, based on the above second mapping relationship, the higher the number of hits, the more frequently the service node corresponding to the access information is accessed. To ensure that the connection will not be interrupted, a higher second deletion time may be set to avoid a connection error caused by a premature deletion of the second mapping relationship when a long connection is established based on the second mapping relationship. For example, in practical applications, during a preset period after the corresponding first mapping relationship is deleted, each time the second mapping relationship is hit, a preset value is added based on the current corresponding second deletion time to delay its corresponding second deletion time.

In an example, the following second step may be further included before performing the above first step:
the second step is: determining the actual access information corresponding to the first access request in a third mapping set, where the third mapping set includes at least one third mapping relationship or the third mapping set is empty; the third mapping relationship is used to record a correspondence between a target access request and access information of a target access request; the target access request is a request that the access information corresponding to the target access request is matchable only based on the second mapping set;
if it is determined that the third mapping set does not include the actual access information corresponding to the first access request, the above step is performed.

Exemplarily, if an order of matching the first mapping set firstly and then the second mapping set is adopted to determine the actual access information corresponding to the first access request, since the deletion time of the first mapping set is earlier than that of the second mapping set, for an access request, if access information corresponding to the access request can be originally determined based on a mapping relationship 1 in a first mapping set, after the mapping relationship 1 in the first mapping set is deleted, a mapping relationship 1 is still included in the second mapping set because the second mapping set is obtained by backing up the first mapping set and has a later deletion time. When the access request establishes a long connection, the access information can still be determined through the mapping relationship 1 in the second mapping set to complete massage encapsulation. However, in a long connection process, if a mapping relationship 2 is newly added to the first mapping set, and virtual address information in the mapping relationship 2 is consistent with virtual address information in the mapping relationship 1, but access information in the mapping relationship 2 is inconsistent with that in the mapping relationship 1 (that is, the deleted virtual address information is allocated for establishing a mapping relationship with other access information), based on the order of matching the first mapping set firstly and then the second mapping set, the access request in the long connection state hits the mapping relationship 2 in the first mapping set again, then the hit access information has been changed, resulting in an error of massage encapsulation and failure of the long connection.

Therefore, in the embodiment, when an access request does not hit the access information in the first mapping set but hits the access information in the second mapping set, the access information hit by the access request (that is, the above target access request) will be stored in the third mapping set. In an initial state, the third mapping set is empty. Also, the third mapping relationship needs to be deleted when a communication connection corresponding to the third mapping relationship (that is, a communication connection between the service node corresponding to the third mapping relationship, and a sender of the access request which performs massage encapsulation based on the third mapping relationship) ends. In addition, when determining the access information corresponding to the access request, the search is given priority in the third mapping relationship included in the third mapping set, thus avoiding the above failure of long connection. For example, a unique identifier may be set for the communication connection corresponding to the target access request, and a third mapping relationship may be set between the unique identifier and the access information corresponding to the target access request.

That is to say, in the embodiment, after receiving the first access request, it is possible to firstly match the actual access information corresponding to the first access request within the third mapping set, that is, determine whether there is a target access request in the same communication connection as the first access request within the third mapping set. If there is no such target access request, the matching is continued in the first mapping set; if a target access request is found, the access information corresponding to the matched target access request is directly used as the actual access information of the first access request to maintain the previous communication connection.

In an example, the third mapping relationship is used specifically to record a correspondence between a quintet in the target access request and the access information of the target access request.

Exemplarily, in the embodiment, the target access request is uniquely identified by a quintet in the target access request. Then, the third mapping relationship can specifically be the correspondence between the quintet of the target access request and the access information corresponding to the target access request. Then, by setting up the third mapping relationship in the above way, a complex operation of setting a unique identifier for the target access request and establishing the third mapping relationship based on the unique identifier is avoided.

S303, performing a modification on the virtual address information in the first access request according to the actual access information to obtain a second access request.

Exemplarily, in the embodiment, after acquiring the above actual access information, a modification may be performed on the virtual address information in the first access request to obtain a second access request. Specifically, the second access request is an access request that uses the actual address information in the actual access information as a destination address, and the second access request may also carry virtual network identifier of a target VPC in the actual address information to indicate the VPC to be accessed. For example, when a virtual extensible local area network (abbreviated as VXLAN) protocol is used for communication with a VPC, the actual address information can be used as an inner destination address corresponding to the second access request. An outer destination address can be an address of the corresponding VXLAN interface on the VPC.

S304, performing encapsulation processing on the virtual network identifier of the target VPC, the MAC address of the target service node, and the second access request based on the virtual extensible local area network protocol to obtain a VXLAN massage, where the VXLAN massage is used for indicating a request of an access to the target service node.

Exemplarily, when a VXLAN protocol is used for communication between the execution entity of the embodiment and a VPC, encapsulation processing can be performed on the obtained second access request based on the VXLAN protocol, to obtain an encapsulated VXLAN massage. For the encapsulation process here, reference can be made to the description of related art and will not be described here.

S305, sending the VXLAN massage to the target service node.

Exemplarily, after obtaining the above VXLAN massage, the massage can be transmitted to the target service node through a VXLAN transmission channel to achieve an access to the target service node.

It can be understood that in the embodiment, the virtual address information in the first access request is replaced and modified based on the actual address information of the target service node and the virtual network identifier of the target VPC in the actual access information, so that the target VPC can accurately determine the target service node which needs to be accessed after acquiring the encapsulated massage, to ensure the accuracy of access connection establishment.

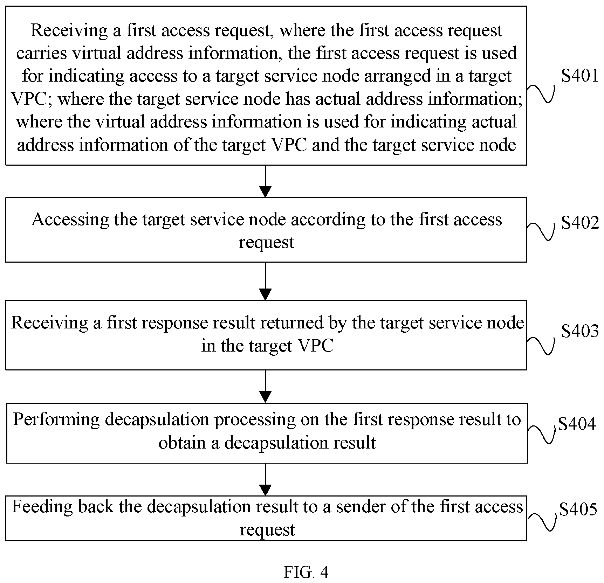

FIG. 4 is a flowchart of a third method for accessing a virtual private cloud provided by an embodiment of the present disclosure, as shown in FIG. 4, the method includes the following steps: S401, receiving a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node.

Exemplarily, an execution entity of the embodiment can be an apparatus for accessing a virtual private cloud (VPC), and the apparatus for accessing a virtual private cloud VPC can be a server (such as a local server, or a cloud server), a computer, a processor, or a chip, etc., which is not limited in the embodiment. For example, the apparatus for accessing a VPC can also be a load balancer device in actual applications, to establish a communication connection between a tenant and a VPC. In addition, in the embodiment, the architecture corresponding to the load balancer device is not specifically limited, for example, it can be a seven-layer load balancing architecture as mentioned in the related art.

For a specific principle of step S401, reference can be made to step S201, which will not be described here.

S402, accessing the target service node according to the first access request.

For a specific principle of step S402, reference can be made to step S202, which will not be described here.

S403, receiving a first response result returned by the target service node in the target VPC, where the first response result is an access result corresponding to the first access request.

Exemplarily, in the embodiment, after receiving a request fed back from a sender of the first access request, the target service node will perform processing according to the received request, and then obtain the first response result, so as to feed the above result back to the sender of the first access request.

In an example, when the target service node generates a first response result, its corresponding virtual address information is taken as an inner source address included in the first response result, so as to ensure that the receiver of the request can determine, based on the above inner source address, that the response result is a result fed back by the target service node which needs to be accessed.

In an example, the first response result carries the actual address information of the target service node and a virtual network identifier of the target VPC. Before step S404, the following steps may be further included: a first step, determining virtual address information carried in the first access request corresponding to the decapsulation result; a second step, replacing the actual address information in the decapsulation result according to the virtual address information corresponding to the decapsulation result to obtain a decapsulation result after replacement.

Exemplarily, in the embodiment, the first response result generated by the target service node carries the actual address information. Since the access request originally carries the virtual address information, in order to ensure that the first response result can be accurately fed back to the sender of the first access request and accurately identified by the sender of the first access request, in the embodiment, the virtual address information corresponding to the decapsulation result after decapsulation is also determined. That is, virtual address information carried in the first access request corresponding to the decapsulation result. For example, in the embodiment, the corresponding virtual address information can be determined according to the actual address information of the target service node and the virtual network identifier of the target VPC in the decapsulation result obtained by decapsulating the first response result. The principle of this step is similar to that of step S302, that is, it can be acquired through a preset correspondence among virtual address information, a virtual network identify of a VPC and actual address information of a service node, which is not specifically limited in the embodiment. Then, the actual address information in the decapsulation result is replaced with the virtual address information, so that the sender of the access request can accurately identify the above decapsulation result.

It can be understood that in the embodiment, by performing a transformation on the actual address information in the first response result, that is, transform the actual address information into the virtual address information corresponding to the target service node, to ensure that the response result can be accurately identified and that a communication between the target service node and the sender of the access request can be accurately carried out.

In an example, the above first step can be implemented by the following steps: determining the virtual address information corresponding to the decapsulation result according to a first mapping set, the virtual network identifier included in the decapsulation result, and the actual address information included in the decapsulation result, where the first mapping set records at least one set of first mapping relationships; the first mapping relationship is a correspondence between virtual address information and access information; the access information includes: a virtual network identifier of a VPC where a service node is located, actual address information of the service node and a MAC address of the target service node.

Exemplarily, reference can be made to the above step S302 for the description of the first mapping set in the embodiment. When determining the virtual address information corresponding to the decapsulation result according to the first mapping set, it is possible to match between the virtual network identifier and actual address information in the decapsulation result, and the access information in the first mapping set, and take the virtual address information corresponding to the matched access information as virtual address information corresponding to the decapsulation result in this step, to complete the replacement of the inner source address (that is, the above actual address information) in the decapsulation result.

It can be understood that in the embodiment, when determining the virtual address information corresponding to the decapsulation result, the first mapping set that was relied upon during the encapsulation of the access request can be reused, thus ensuring that the communication connection can be established accurately.

In an example, after performing the step: "determining the virtual address information corresponding to the decapsulation result according to the first mapping set, the virtual network identifier included in the decapsulation result, and the actual address information included in the decapsulation result", the following steps can be further included: if it is determined that the first mapping set does not include the virtual address information corresponding to the decapsulation result, determining the virtual address information corresponding to the decapsulation result in a second mapping set; where the second mapping set is obtained by backing up the first mapping set, and a first deletion time corresponding to the first mapping set is earlier than a second deletion time corresponding to the second mapping set; where the first deletion time is a time when the first mapping relationship in the first mapping set is deleted, the second deletion time is a time when a second mapping relationship in the second mapping set is deleted, and the second mapping relationship is obtained by backing up the first mapping relationship.

Exemplarily, reference can be made to the above step S302 for the principle of the second mapping set in the embodiment. By setting up the second mapping set whose second mapping relationship can be deleted with a delay, the service node can still determine the virtual address information corresponding to the service node based on the second mapping relationship included in the second mapping set and complete the modification of the inner source address in the decapsulation result when the first mapping relationship is mistakenly deleted, so as to ensure that a long connection between the access requester and the service node will not get interrupted when the first mapping relationship is deleted.

In an example, before the first step above, the method further includes the following steps: determining the virtual address information corresponding to the decapsulation result in a fourth mapping set, where the fourth mapping set includes at least one fourth mapping relationship or the fourth mapping set is empty. The fourth mapping relationship is used to record a correspondence between a target decapsulation result and virtual address information; the target decapsulation result is a decapsulation result that the virtual address information corresponding to the target decapsulation result is can be matched only based on the fourth mapping set; if it is determined that the fourth mapping set does not include the virtual address information corresponding to the decapsulation result, performing the step of determining the virtual address information corresponding to the decapsulation result according to the first mapping set, the virtual network identifier included in the decapsulation result, and the actual address information comprised in the decapsulation result.

Exemplarily, in the embodiment, when there is no matching virtual address information in the first mapping set for a decapsulation result, but there is matching virtual address information in the second mapping set, the decapsulation result can be regarded as the target decapsulation result in the embodiment. Then, the target decapsulation result and its corresponding virtual address information can be stored in the fourth mapping set as a fourth mapping relationship. When receiving the decapsulation result, matching can be performed in the fourth mapping relationship set firstly to determine the decapsulation result fed back by the target service node corresponding to the decapsulation result before, if there exits another decapsulation result in the same communication connection as the decapsulation result, virtual address information in the fourth mapping relationship associated with the remaining decapsulation result will be taken as the virtual address information of the decapsulation result received this time.

That is, when determining the virtual address information of the decapsulation result, matching can be performed according to an order of the fourth mapping set, the first mapping set and the second mapping set until the virtual address information corresponding to the decapsulation result is obtained.

In an example, with regard to the fourth mapping relationship, the mapping to the virtual address information can be established by the unique identifier generated by the virtual network identifier and the actual address information in a target decapsulation result, to reduce the storage space of the fourth mapping relationship.

In an example, when it is determined that the communication connection corresponding to the fourth mapping relationship is stopped, the fourth mapping relationship can be deleted.

It can be understood that in the embodiment, by setting up the fourth mapping set and preferentially performing matching within the fourth mapping set, the interruption of the original long connection that would occur if the same virtual address, after being reassigned to another service node following the deletion of the first mapping relationship, was still matched preferentially against the first mapping set can be avoided.

In an example, the fourth mapping relationship is used to record a correspondence between virtual address information and an address set in a target decapsulation result, the address set includes a quintet in the target decapsulation result and a virtual network identifier in the target decapsulation result.

Exemplarily, in the embodiment, when setting the fourth mapping relationship, the correspondence among the virtual network identifier, the quint, and the virtual address information in the target decapsulation result can be set as the fourth mapping relationship. Then, the above virtual network identifier and the quint are used to identify the target decapsulation result to ensure the uniqueness of the downstream communication connection corresponding to the target decapsulation result and the accuracy of the communication connection.

S404, performing decapsulation processing on the first response result to obtain a decapsulation result.

Exemplarily, in the embodiment, since data is usually subject to encapsulation processing before it is transmitted over a transmission channel, the first response result is also subject to decapsulation processing after the first response result is acquired to obtain a result after decapsulation. For example, when a VXLAN tunnel is taken as a data transmission channel, decapsulation processing can be performed on the first response result based on the VXLAN protocol.

S405, feeding back the decapsulation result to a sender of the first access request.

Exemplarily, after obtaining the decapsulation result, a sender of an access request to which the decapsulation result needs to be fed back correspondingly can be determined according to the decapsulation result, and the decapsulation result can be sent to a sender of the first access request determined to realize a communication connection between the sender of the first access request and the target service node.

It can be understood that in the embodiment, further, after the access request is acquired by the target service node, the target service node will also send a corresponding feedback result to the sender of the corresponding access request, thereby completing a communication connection there between.

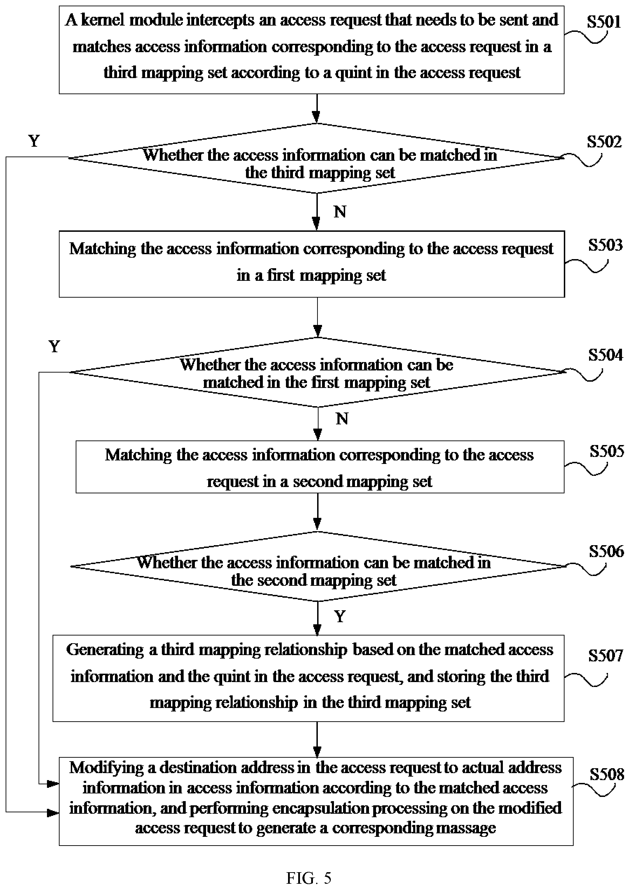

For example, FIG. 5 is a flowchart of message encapsulation provided by an embodiment of the present disclosure. As shown in FIG. 5, an execution entity of the embodiment can be a kernel module in a load balancer device.

S501, the kernel module intercepts an access request that needs to be sent and matches access information corresponding to the access request in a third mapping set according to a quint in the access request.

S502, determining whether the access information can be successfully matched in the third mapping set.

S503, if it is determined that no match is found, matching the access information corresponding to the access request in a first mapping set.

S504, determining whether the access information can be successfully matched in the first mapping set.

S505, if it is determined that no match is found, matching the access information corresponding to the access request in a second mapping set.

S506, determining whether the access information can be successfully matched in the second mapping set.

S507, if it is determined that the access information can be successfully matched in the second mapping set, generating a third mapping relationship based on the matched access information and the quint in the access request, and storing the third mapping relationship in the third mapping set.

S508, modifying a destination address in the access request to actual address information in access information according to the matched access information, and performing encapsulation processing on the modified access request to generate a corresponding massage.

Exemplarily, the method provided in the embodiment is used to realize the above technical solution, and their implementation principles and technical effects are similar, which will not be described here.

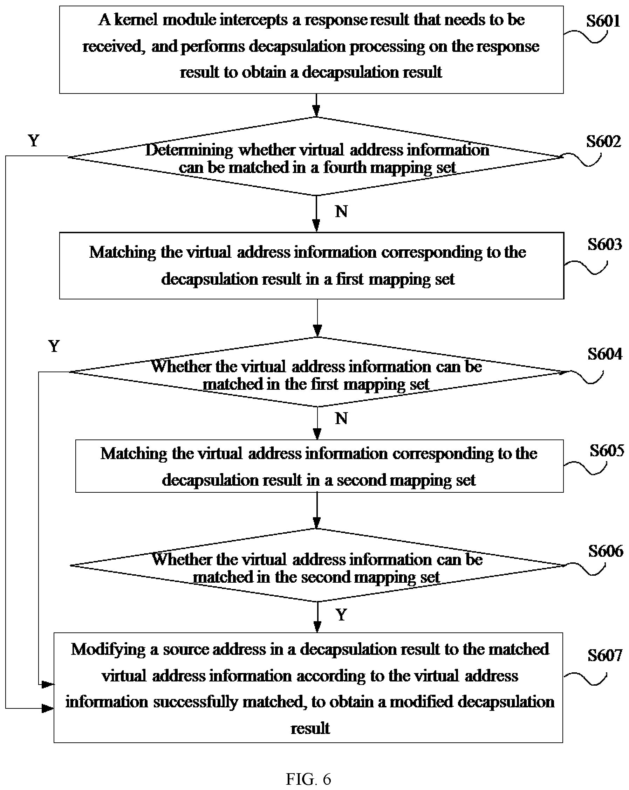

For example, FIG. 6 is a flowchart of message decapsulation provided by an embodiment of the present disclosure. As shown in FIG.6, an execution entity in the embodiment can be a kernel module in a load balancer device.

S601, a kernel module intercepts a response result that needs to be received, and performs decapsulation processing on the response result to obtain a decapsulation result.

S602, determining whether virtual address information corresponding to the decapsulation result can be successfully matched in a fourth mapping set.

S603, if it is determined that no match is found, matching the virtual address information corresponding to the decapsulation result in a first mapping set.

S604, determining whether the virtual address information corresponding to the decapsulation result can be successfully matched in the first mapping set.

S605, if it is determined that no match is found, matching the virtual address information corresponding to the decapsulation result in a second mapping set.

S606, determining whether the virtual address information corresponding to the decapsulation result can be successfully matched in the second mapping set.

S607, modifying a source address in the decapsulation result to the matched virtual address information according to the virtual address information successfully matched, to obtain a modified decapsulation result.

Exemplarily, the method provided in the embodiment is used to realize the above technical solution, and their implementation principles and technical effects are similar, which will not be described here.

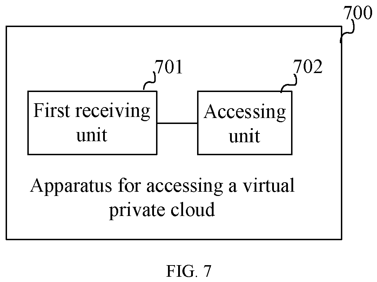

FIG. 7 is a schematic structural diagram of an apparatus for accessing a virtual private cloud provided by an embodiment of the present disclosure. As shown in FIG. 7, the apparatus 700 for accessing a virtual private cloud, including:
a first receiving unit 701, configured to receive a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node;
an accessing unit 702, configured to access the target service node according to the first access request.

The apparatus provided in the embodiment is configured to realize the above technical solution provided by the above method, and its implementation principle and technical effect are similar, which will not be described here.

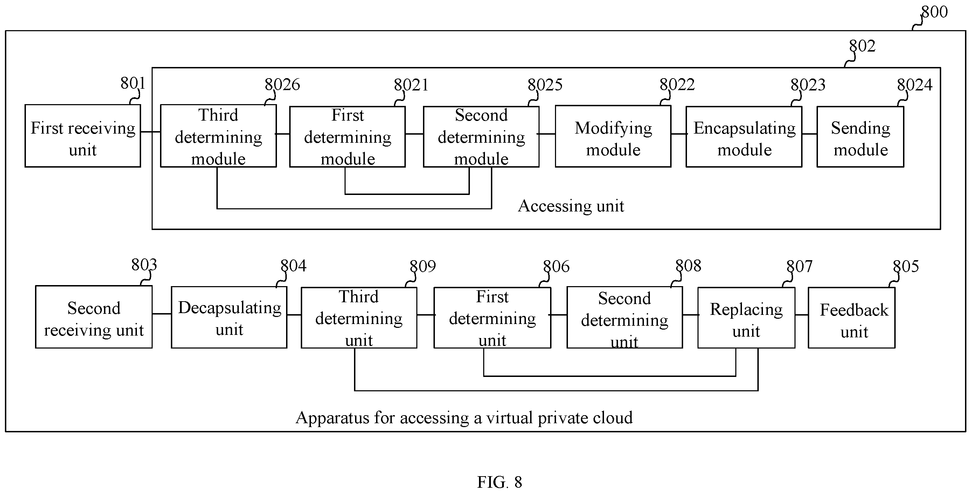

FIG. 8 is a schematic structural diagram of another apparatus for accessing a virtual private cloud provided by an embodiment of the present disclosure. As shown in FIG. 8, the apparatus 800 for accessing a virtual private cloud, including:
a first receiving unit 801, configured to receive a first access request, where the first access request carries virtual address information, the first access request is used for indicating access to a target service node arranged in a target VPC; where the target service node has actual address information; where the virtual address information is used for indicating actual address information of the target VPC and the target service node, and the actual address information is a real address of a service node;
an accessing unit 802, configured to access the target service node according to the first access request.

The apparatus provided in the embodiment is configured to realize the above technical solution provided by the above method, and its implementation principle and technical effect are similar, which will not be described here.

In an example, the accessing unit 802 includes:
a first determining module 8021, configured to determine actual access information corresponding to the first access request, where the actual access information includes a virtual network identifier of the target VPC and the actual address information of the target service node;
a modifying module 8022, configured to perform a modification on the virtual address information in the first access request according to the actual access information to obtain a second access request;
an encapsulating module 8023, configured to perform encapsulation processing on the second access request based on a virtual extensible local area network VXLAN protocol to obtain a VXLAN massage, where the VXLAN massage is used for indicating a request of an access to the target service node;
a sending module 8024, configured to send the VXLAN massage to the target service node.

In an example, the first determining module 8021 is further configured to:
determine the actual access information corresponding to the first access request according to a first mapping set and the virtual address information in the first access request, where the first mapping set records at least one set of first mapping relationships; where the first mapping relationship is a correspondence between virtual address information and access information; where the access information includes a virtual network identifier of a VPC where a service node is located, actual address information of the service node and a media access control address MAC address of the service node; the actual access information further includes the MAC address of the target service node.

In an example, the apparatus further includes: a second determining module 8025;
the second determining module 8025, configured to, if it is determined that the first mapping set does not include the actual access information of the first access request, determine the actual access information of the first access request according to a second mapping set, where the second mapping set is obtained by backing up the first mapping set, and a first deletion time corresponding to the first mapping set is earlier than a second deletion time corresponding to the second mapping set;
where the first deletion time is a time when the first mapping relationship in the first mapping set is deleted, the second deletion time is a time when a second mapping relationship in the second mapping set is deleted, and the second mapping relationship is obtained by backing up the first mapping relationship.

In an example, the second deletion time corresponding to the second mapping relationship is positively correlated with a hit count of the second mapping relationship; where the hit count is used to represent the number of times that access information is successfully matched through the second mapping relationship.

In an example, the apparatus further includes:
a third determining module 8026, configured to, before the first determining module 8021 determines the actual access information corresponding to the first access request according to the first mapping set and the virtual address information in the first access request, determine the actual access information corresponding to the first access request in a third mapping set; where the third mapping set includes at least one third mapping relationship or the third mapping set is empty; the third mapping relationship is used to record a correspondence between a target access request and access information of a target access request; the target access request is a request that the access information corresponding to the target access request is matchable only based on the second mapping set;
the first determining module 8021 is further configured to, if it is determined that the third mapping set does not include the actual access information corresponding to the first access request, perform the step of determining the actual access information corresponding to the first access request according to the first mapping set and the virtual address information in the first access request.

In an example, the third mapping relationship is specifically configured to record a correspondence between a quintet in in the target access request and the access information of the target access request.

In an example, the apparatus further includes:
a second receiving unit 803, configured to receive a first response result returned by the target service node in the target VPC, where the first response result is an access result corresponding to the first access request;
a decapsulating unit 804, configured to perform decapsulation processing on the first response result to obtain a decapsulation result;
a feedback unit 805, configured to feed back the decapsulation result to a sender of the first access request.

In an example, the first response result carries the actual address information of the target service node and a virtual network identifier of the target VPC; the apparatus further includes:
a first determining unit 806, configured to, before the feedback unit 805 feeds back the decapsulation result to the sender of the first access request, determine virtual address information carried in the first access request corresponding to the decapsulation result;
a replacing unit 807, configured to replace the actual address information in the decapsulation result according to the virtual address information corresponding to the decapsulation result to obtain a decapsulation result after replacement.

In an example, the first determining unit 806 is further configured to:
determine the virtual address information corresponding to the decapsulation result according to a first mapping set, the virtual network identifier included in the decapsulation result, and the actual address information included in the decapsulation result; where the first mapping set records at least one set of first mapping relationships; the first mapping relationship is a correspondence between virtual address information and access information; the access information includes a virtual network identifier of a VPC where a service node is located, actual address information of the service node and a MAC address of the target service node.

In an example, the apparatus further includes, a second determining unit 808; the second determining unit 808 is configured to, if it is determined that the first mapping set does not include the virtual address information corresponding to the decapsulation result, determine the virtual address information corresponding to the decapsulation result in a second mapping set; where the second mapping set is obtained by backing up the first mapping set, and a first deletion time corresponding to the first mapping set is earlier than a second deletion time corresponding to the second mapping set; where the first deletion time is a time when the first mapping relationship in the first mapping set is deleted; the second deletion time is a time when a second mapping relationship in the second mapping set is deleted, and the second mapping relationship is obtained by backing up the first mapping relationship.

In an example, the apparatus further includes:
a third determining unit 809, configured to, before the first determining unit 806 determines the virtual address information corresponding to the decapsulation result according to the first mapping set, the virtual network identifier included in the decapsulation result, and the actual address information included in the decapsulation result, determine the virtual address information corresponding to the decapsulation result in a fourth mapping set; where the fourth mapping set includes at least one fourth mapping relationship or the fourth mapping set is empty; the fourth mapping relationship is used to record a correspondence between a target decapsulation result and virtual address information; the target decapsulation result is a decapsulation result that the virtual address information corresponding to the target decapsulation result is matchable only based on the fourth mapping set;
the first determining unit 806 is further configured to, if it is determined that the fourth mapping set does not include the virtual address information corresponding to the decapsulation result, perform the step of determining the virtual address information corresponding to the decapsulation result according to the first mapping set, the virtual network identifier comprised in the decapsulation result, and the actual address information comprised in the decapsulation result.

In an example, the fourth mapping relationship is used to record a correspondence between virtual address information and an address set in the target decapsulation result; the address set includes a quintet in the target decapsulation result and a virtual network identifier in the target decapsulation result.

In an example, the actual address information is an internet protocol (IP) address of the service node.

The apparatus provided in the embodiment is configured to realize the above technical solution provided by the above method, and its implementation principle and technical effect are similar, which will not be described here.

According to the embodiments of the present disclosure, an electronic device, a readable storage medium, and a computer program product are provided in the present disclosure.

An electronic device is provided by the present disclosure, including: at least one processor; and a memory communicatively connected with the at least one processor; where the memory stores an instruction executable by the at least one processor, and the instruction is executed by the at least one processor to enable the at least one processor to execute the method provided by any of the above embodiments.

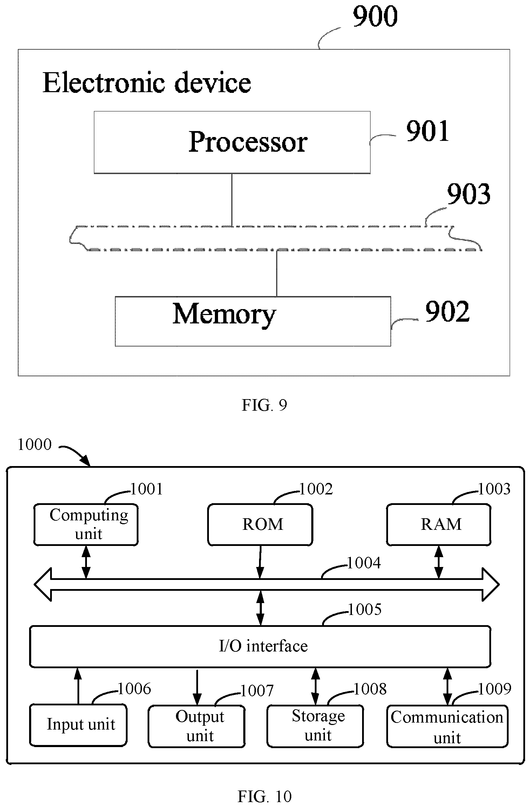

FIG. 9 is a schematic structural diagram of an electronic device provided by an embodiment of the present disclosure. As shown in FIG. 9, the electronic device 900 in the present disclosure can include a processor 901 and a memory 902.

The memory 902 is configured to store programs; the memory 902 can include a volatile memory, such as a random-access memory (abbreviated as: RAM), a static random-access memory (abbreviated as: SRAM), a double data rate synchronous dynamic random access memory (abbreviated as: DDR SDRAM), etc.; the memory can further include a non-volatile memory, such as a flash memory. The memory 902 is configured to store computer programs (such as application programs, functional modules or the like for implementing the above method), computer instructions, etc., which can be partitioned and stored in one or more memory 902. In addition, the above computer programs, computer instructions, data, etc. can be invoked by the processor 901.

The processor 901 is configured to execute the computer programs stored in the memory 902 to implement the steps of the methods mentioned in the above embodiments.

For specific details, reference can be made to the related descriptions in the previous method embodiments.

The processor 901 and the memory 902 can be independent structures or integrated together. When the processor 901 and the memory 902 are independent structures, the memory 902 and the processor 901 can be coupled via a bus 903.

Exemplarily, the electric device provided in the embodiment can execute the technical solution of the above methods, and its implementation principle and technical effect are similar, which will not be described here.

A non-transitory computer readable storage medium storing computer instructions is provided in the present disclosure, where the computer instructions are configured to enable a computer to execute the methods provided in any of the above embodiments.

According to an embodiment of the present disclosure, a computer program product including a computer program is provided, the computer program is stored in a readable storage medium, at least one processor of an electronic device may read the computer program from the readable storage medium, and the at least one processor executes the computer program to enable the electronic device to execute the method described in the first aspect.

FIG. 10 shows a schematic block diagram of an example electronic device 1000 which can be configured to implement the embodiments of the present disclosure. The electronic device is intended to represent various forms of digital computers, for example, a laptop, a desktop computer, a workstation, a personal digital assistant, a server, a blade server, a mainframe computer, and other suitable computers. The electronic device may also represent various forms of mobile apparatuses, for example, personal digital processing, a cellular telephone, a smart phone, a wearable device, and other similar computing apparatuses. Components, connections and relationships thereof, and functions thereof shown herein are used as examples only, and are not intended to limit implementations of the present disclosure described and/or claimed herein.

As shown in FIG. 10, the device 1000 includes a computing unit 1001 which can perform various appropriate actions and processes according to a computer program stored in a read only memory (ROM) 1002 or loaded from a storage unit 1008 into a random access memory (RAM) 1003. In the RAM 1003, various programs and data required for operations of the device 1000 may also be stored. The computing unit 1001, the ROM 102, and the RAM 1003 are connected to each other via a bus 1004. An input/output (I/O) interface 1005 is also connected to the bus 1004.

A plurality of components in the device 1000 are connected to the I/O interface 1005, including: an input unit 1006, for example, a keyboard, mouse, etc.; an output unit 1007, for example, various types of displays, speakers, etc.; a storage unit 1008, for example, a magnetic disk, an optical disk, etc.; and a communication unit 1009, for example, a network card, a modem, a wireless communication transceiver, etc. The communication unit 1009 allows the device 1000 to exchange information/data with other devices via a computer network such as the Internet and/or various telecommunication networks.

The computing unit 1001 may be various general-purpose and/or dedicated processing components with processing and computing capabilities. Some examples of the computing unit 1001 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 1001 performs the various methods and processes described above, for example, the method for accessing a virtual private cloud. For example, in some embodiments, the method for accessing a virtual private cloud may be implemented as a computer software program which is tangibly contained in a machine readable medium, for example, the storage unit 1008. In some embodiments, some or all of computer programs may be loaded and/or installed onto the device 1000 via the ROM 1002 and/or the communication unit 1009. When the computer program is loaded into the RAM 1003 and executed by the computing unit 1001, one or more steps of the method for accessing a virtual private cloud described above may be executed. Alternatively, in other embodiments, the computing unit 1001 may be configured to perform the method for accessing a virtual private cloud in any other suitable means (e.g., by means of firmware).

Various implementation modes of systems and techniques described above herein may be realized in a digital electronic circuit system, an integrated circuit system, a field programmable gate array (FPGA), an application-specific integrated circuit (ASIC), an application-specific standard product (ASSP), a system of a system-on-chip (SOC), a complex programmable logic device (CPLD), computer hardware, firmware, software, and/or a combination thereof. These various implementation modes may include: being implemented in one or more computer programs, where the one or more computer programs may be executed and/or interpreted on a programmable system including at least one programmable processor, and the programmable processor may be a dedicated or general-purpose programmable processor which may receive data and instructions from a storage system, at least one input apparatus, and at least one output apparatus, and transmit data and instructions to the storage system, the at least one input apparatus, and the at least one output apparatus.

Program codes for implementing the methods of the present disclosure may be written in any combination of one or more programming languages. These program codes may be provided to a processor or controller of a general-purpose computer, a dedicated computer, or other programmable data processing apparatuses, to cause functions/operations specified in the flowcharts and/or block diagrams to be implemented when the program codes are executed by the processor or the controller. The program codes may be executed entirely on a machine, executed partially on a machine, executed partially on a machine as a stand-alone software package and executed partially on a remote machine or executed entirely on a remote machine or a server.

In the context of the present disclosure, a machine readable medium may be a tangible medium which may contain or store a program for use by or in combination with an instruction execution system, an apparatus, or a device. The machine readable medium may be a machine readable signal medium or a machine readable storage medium. The machine readable medium may include, but is not limited to, an electronic, magnetic, optical, electromagnetic, infrared, or semiconductor system, device, or apparatus, or any suitable combination of the foregoing. More specific examples of the machine readable storage medium may include electrical connections based on one or more wires, a portable computer disk, a hard disk, a random access memory (RAM), a read only memory (ROM), an erasable programmable read only memory (EPROM or a flash memory), an optical fiber, portable compact disk-read only memory (CD-ROM), an optical storage device, a magnetic storage device, or any suitable combination of the foregoing.

To provide interaction with a user, the systems and the techniques described herein may be implemented on a computer having: a display apparatus (e.g., a CRT (cathode ray tube) or LCD (liquid crystal display) monitor) configured to display information to the user; and a keyboard and a pointing apparatus (e.g., a mouse or a trackball) by which the user can provide input to the computer. Other kinds of apparatuses may also be used to provide interaction with the user; for example, a feedback provided to the user may be any form of sensory feedback (e.g., a visual feedback, an auditory feedback, or a haptic feedback); and input from the user may be received in any form (including acoustic input, voice input, or, haptic input).

The systems and the techniques described herein may be implemented in a computing system which includes a back-end component (e.g., as a data server), or a computing system which includes a middleware component (e.g., an application server), or a computing system which includes a front-end component (e.g., a user computer having a graphical user interface or a web browser through which a user can interact with the systems and the techniques described herein), or a computing system which includes any combination of such back-end component, middleware component, or front-end component. Components of a system may be interconnected by digital data communication (e.g., a communication network) in any form or medium. Examples of the communication network include: a local area network (LAN), a wide area network (WAN), and the Internet.

A computer system may include a client and a server. The client and the server are generally far away from each other and usually interact over a communication network. A client-server relationship is created by computer programs which run on corresponding computers and have a client-server relationship with each other. The server may be a cloud server, also referred to as cloud computing server or cloud host, which is a host product in the cloud computing service system to address shortcomings of large management difficulty and weak service scalability in traditional physical hosts and VPS ("Virtual Private Server", or abbreviated as "VPS") services. The server may also be a server for a distributed system, or a server in combination with a blockchain.

It should be understood that various forms of the processes shown above may be used, with steps reordered, added or deleted. For example, steps recited in the present disclosure may be executed in parallel or sequentially or in a different order, as long as desired results of technical solutions disclosed in the present disclosure can be achieved, and are not limited herein.

The aforementioned embodiments do not constitute a limitation on protection scope of the present disclosure. It should be apparent to those skilled in the art that various modifications, combinations, sub-combinations and substitutions may be made depending on design requirements and other factors. Any modifications, equivalent substitutions and improvements made within principles of the present disclosure should be contained in the protection scope of the present disclosure.

## Claims

1. A method for accessing a virtual private cloud, VPC, comprising:
receiving (S201, S301, S401) a first access request, wherein the first access request carries virtual address information, the first access request is used for indicating access to a target service node arranged in a target VPC; wherein the target service node has actual address information; wherein the virtual address information is used for indicating actual address information of the target VPC and the target service node, and the actual address information is a real address of a service node;
accessing (S202, S402) the target service node according to the first access request.

2. The method according to claim 1, wherein the accessing (S202, S402) the target service node according to the first access request, comprises:
determining (S302) actual access information corresponding to the first access request, wherein the actual access information comprises a virtual network identifier of the target VPC and the actual address information of the target service node;
performing (S303) a modification on the virtual address information in the first access request according to the actual access information to obtain a second access request;
performing (S304) encapsulation processing on the second access request based on a virtual extensible local area network, VXLAN, protocol to obtain a VXLAN massage, wherein the VXLAN massage is used for indicating a request of an access to the target service node;
sending (S305) the VXLAN massage to the target service node.

3. The method according to claim 2, wherein the determining (S302) the actual access information corresponding to the first access request, comprises:
determining the actual access information corresponding to the first access request according to a first mapping set and the virtual address information in the first access request, wherein the first mapping set records at least one set of first mapping relationships; wherein the first mapping relationship is a correspondence between virtual address information and access information; wherein the access information comprises a virtual network identifier of a VPC where a service node is located, actual address information of the service node and a media access control address, MAC address, of the service node; wherein the actual access information further comprises the MAC address of the target service node.

4. The method according to claim 3, further comprising:
if it is determined that the first mapping set does not comprise the actual access information of the first access request, determining the actual access information of the first access request according to a second mapping set, wherein the second mapping set is obtained by backing up the first mapping set, and a first deletion time corresponding to the first mapping set is earlier than a second deletion time corresponding to the second mapping set;
wherein the first deletion time is a time when the first mapping relationship in the first mapping set is deleted, the second deletion time is a time when a second mapping relationship in the second mapping set is deleted, and the second mapping relationship is obtained by backing up the first mapping relationship.

5. The method according to claim 4, wherein the second deletion time corresponding to the second mapping relationship is positively correlated with a hit count of the second mapping relationship; wherein the hit count is used to represent a number of times that access information is successfully matched through the second mapping relationship.

6. The method according to claim 4 or 5, before the determining the actual access information corresponding to the first access request according to the first mapping set and the virtual address information in the first access request, further comprising:
determining the actual access information corresponding to the first access request in a third mapping set, wherein the third mapping set comprises at least one third mapping relationship or the third mapping set is empty; wherein the third mapping relationship is used to record a correspondence between a target access request and access information of a target access request; wherein the target access request is a request that the access information corresponding to the target access request is matchable only based on the second mapping set;
if it is determined that the third mapping set does not comprise the actual access information corresponding to the first access request, performing the step of determining the actual access information corresponding to the first access request according to the first mapping set and the virtual address information in the first access request, optionally,
wherein the third mapping relationship is specifically used to record a correspondence between a quintet in the target access request and the access information of the target access request.

7. The method according to any one of claims 1 to 6, further comprising:
receiving (S403) a first response result returned by the target service node in the target VPC, wherein the first response result is an access result corresponding to the first access request;
performing (S404) decapsulation processing on the first response result to obtain a decapsulation result;
feeding back (S405) the decapsulation result to a sender of the first access request.

8. The method according to claim 7, wherein the first response result carries the actual address information of the target service node and a virtual network identifier of the target VPC;
wherein before the feeding back (S405) the decapsulation result to the sender of the first access request, the method further comprises:
determining virtual address information carried in the first access request corresponding to the decapsulation result;
replacing the actual address information in the decapsulation result according to the virtual address information corresponding to the decapsulation result to obtain a decapsulation result after replacement.

9. The method according to claim 8, wherein the determining the virtual address information carried in the first access request corresponding to the decapsulation result, comprises:
determining the virtual address information corresponding to the decapsulation result according to a first mapping set, the virtual network identifier comprised in the decapsulation result, and the actual address information comprised in the decapsulation result, wherein the first mapping set records at least one set of first mapping relationships; wherein the first mapping relationship is a correspondence between virtual address information and access information; wherein the access information comprises: a virtual network identifier of a VPC where a service node is located, actual address information of the service node and a MAC address of the target service node.

10. The method according to claim 9, further comprising:
if it is determined that the first mapping set does not comprise the virtual address information corresponding to the decapsulation result, determining the virtual address information corresponding to the decapsulation result in a second mapping set; wherein the second mapping set is obtained by backing up the first mapping set, and a first deletion time corresponding to the first mapping set is earlier than a second deletion time corresponding to the second mapping set;
wherein the first deletion time is a time when the first mapping relationship in the first mapping set is deleted, the second deletion time is a time when a second mapping relationship in the second mapping set is deleted, and the second mapping relationship is obtained by backing up the first mapping relationship.

11. The method according to claim 10, before determining the virtual address information corresponding to the decapsulation result according to the first mapping set, the virtual network identifier comprised in the decapsulation result, and the actual address information comprised in the decapsulation result, further comprising:
determining the virtual address information corresponding to the decapsulation result in a fourth mapping set, where the fourth mapping set comprises at least one fourth mapping relationship or the fourth mapping set is empty; wherein the fourth mapping relationship is used to record a correspondence between a target decapsulation result and virtual address information; wherein the target decapsulation result is a decapsulation result that the virtual address information corresponding to the target decapsulation result is matchable only based on the fourth mapping set;
if it is determined that the fourth mapping set does not comprise the virtual address information corresponding to the decapsulation result, performing the step of determining the virtual address information corresponding to the decapsulation result according to the first mapping set, the virtual network identifier comprised in the decapsulation result, and the actual address information comprised in the decapsulation result.

12. The method according to claim 11, wherein the fourth mapping relationship is used to record a correspondence between virtual address information and an address set in the target decapsulation result; wherein the address set comprises a quintet in the target decapsulation result and a virtual network identifier in the target decapsulation result.

13. The method according to any one of claims 1 to 12, wherein the actual address information is an internet protocol, IP, address of the service node.

14. An apparatus (700, 800) for accessing a virtual private cloud, VPC, comprising:
a first receiving unit (701, 801), configured to receive a first access request, wherein the first access request carries virtual address information, the first access request is used for indicating access to a target service node arranged in a target VPC; wherein the target service node has actual address information; wherein the virtual address information is used for indicating actual address information of the target VPC and the target service node, and the actual address information is a real address of a service node;
an accessing unit (702, 802), configured to access the target service node according to the first access request.

15. A computer readable storage medium with a computer instruction stored thereon, wherein the computer instruction is configured to enable a computer to execute the method according to any one of claims 1 to 13.
